(19) Europäisches Patentamt / European Patent Office / Office européen des brevets

(11) **EP 2 410 456 A1**

(12) **EUROPEAN PATENT APPLICATION**

(43) Date of publication:
**25.01.2012 Bulletin 2012/04**

(51) Int Cl.:
***G06F 21/20*** *(2006.01)*

(21) Application number: **11185500.3**

(22) Date of filing: **09.11.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.11.2006 US 600245**
**14.11.2006 US 600262**

(62) Document number(s) of the earlier application(s) in accordance with Art. 76 EPC:
**07867399.3 / 2 082 347**

(71) Applicant: **Sandisk Corporation**
**Milpitas, CA 95035 (US)**

(72) Inventors:
• **Sharghi, Farshid Sabet**
**Los Altos Hills, CA 94024 (US)**
• **Jogand-Coulomb, Fabrice**
**San Carlos, CA 94070 (US)**
• **Qawami, Bahman**
**San Jose, CA 95138 (US)**

(74) Representative: **Prock, Thomas**
**Marks & Clerk LLP**
**90 Long Acre**
**London**
**WC2E 9RA (GB)**

Remarks:
This application was filed on 17-10-2011 as a divisional application to the application mentioned under INID code 62.

(54) **Methods and apparatuses for binding content to a separate memory device**

(57) A method for accessing content is provided. In the method, information from a first memory device is retrieved. A parameter is generated based on the information and an account on a second memory device is accessed based on the parameter. The second memory device is configured to store the content and the account is associated with the content. The first and second memory devices are configured to be removably coupled to a computing device. A memory device is also provided comprising a memory and a memory controller. The memory controller is configured to encrypt information stored in the memory to define a parameter and access an account on a second memory device based on the parameter to gain access to content. The content is stored in the second memory device and the memory device and the second memory device are configured to be removably coupled to a computing device.

Fig. 1

EP 2 410 456 A1

**Description**

**FIELD OF THE INVENTION**

Embodiments of the present invention relate generally to content access and, more particularly, to binding content to a separate memory device.

**BACKGROUND**

Digital rights management (DRM) is a technology used to protect and control the distribution of contents, such as music files, video files, and other contents. The DRM may, for instance, be used to limit the distribution and access of content to a particular mobile phone. Here, a user may purchase content stored in a memory card and, to bind the content with a mobile phone, the mobile phone stores a secret. In DRM, content is encrypted with a cryptographic key, whereby the cryptographic key can also be used to decrypt the content. A cryptographic key used to decrypt the content may be derived from the secret stored in the mobile phone and the content can therefore be accessed based on the cryptographic key.

A limitation with storing the secret in the mobile phone is that if the user changes to a different mobile phone, the content will not be accessible by this mobile phone because it does not include the secret. As a result, there is a need to further improve the protection of content.

**SUMMARY**

Various embodiments of the present invention provide methods, apparatuses, systems and/or devices for binding content to a separate memory device. It should be appreciated that the embodiments can be implemented in numerous ways, including as a method, a circuit, a system, or a device. Several embodiments of the present invention are described below.

In an embodiment, a method for accessing content is provided. In this method, information from a first memory device is retrieved. A parameter is generated based on the information and an account on a second memory device is accessed based on the parameter. The second memory device is configured to store the content and the account is associated with the content. The first and second memory devices are configured to be removably coupled to a computing device.

In another embodiment, a memory device is provided. The memory device includes a memory configured to store information. The memory device also includes a memory controller in communication with the memory. The memory controller is configured to encrypt the information to define a parameter and access an account on a second memory device based on the parameter to gain access to content. The content is stored in the second memory device and the memory device and the second memory device are configured to be removably coupled to a computing device.

Other embodiments and advantages of the invention are apparent from the following detailed description, taken in conjunction with the accompanying drawings, illustrating by way of example the principles of the invention.

**BRIEF DESCRIPTION OF THE DRAWINGS**

The present invention will be readily understood by the following detailed description in conjunction with the accompanying drawings, and like reference numerals designate like structural elements.

Figure 1 is a simplified block diagram of a system of apparatuses for accessing content, in accordance with an embodiment of the invention.

Figure 2 is a flowchart diagram of a general overview for accessing content stored in a memory device, in accordance with an embodiment of the invention.

Figure 3 is a simplified block diagram of a system for accessing content, in accordance with an embodiment of the invention.

Figure 4 is a flowchart diagram depicting the access of an account to gain access to content, in accordance with an embodiment of the invention.

Figure 5 is a simplified block diagram of a system for accessing content, in accordance with another embodiment of the invention.

Figure 6 is a flowchart diagram depicting the access of an account to gain access to content, in accordance with another embodiment of the invention.

Figure 7 is a flowchart diagram of a general overview for generating a binding configuration, in accordance with an embodiment of the invention.

Figure 8 is a simplified block diagram of a license and content with binding configuration, in accordance with an embodiment of the invention.

Figure 9 is a simplified block diagram of program applications that may be hosted on a host computing device for accessing content and generating a binding configuration, in accordance with an embodiment of the invention.

Figure 10 is a simplified block diagram of program applications that may be included in a memory device, in accordance with an embodiment of the invention.

Figure 11 is a simplified block diagram of a general overview of a host computing device suitable for hosting a content protection platform and other program applications, in accordance with an embodiment of the invention.

Figure 12 is a simplified block diagram of a memory device, in accordance with an embodiment of the invention.

## DETAILED DESCRIPTION

A detailed description of one or more embodiments is provided below along with accompanying figures. The detailed description is provided in connection with such embodiments, but is not limited to any particular embodiment. The scope is limited only by the claims and numerous alternatives, modifications, and equivalents are encompassed. Numerous specific details are set forth in the following description in order to provide a thorough understanding. These details are provided for the purpose of example and the described embodiments may be implemented according to the claims without some or all of these specific details. For the purpose of clarity, technical material that is known in the technical fields related to the embodiments has not been described in detail to avoid unnecessarily obscuring the description.

The embodiments described herein provide the binding of content to a separate memory device. To access content stored in a memory device, information from a separate memory device is retrieved. As will be explained in more detail below, a parameter is generated based on the information. With the parameter, the content may be accessed. Without the parameter, the content is not accessible. By using information from a separate memory device to access the content, the content is thereby linked to the separate memory device. The generation of a binding configuration is also described below.

Content Accessing

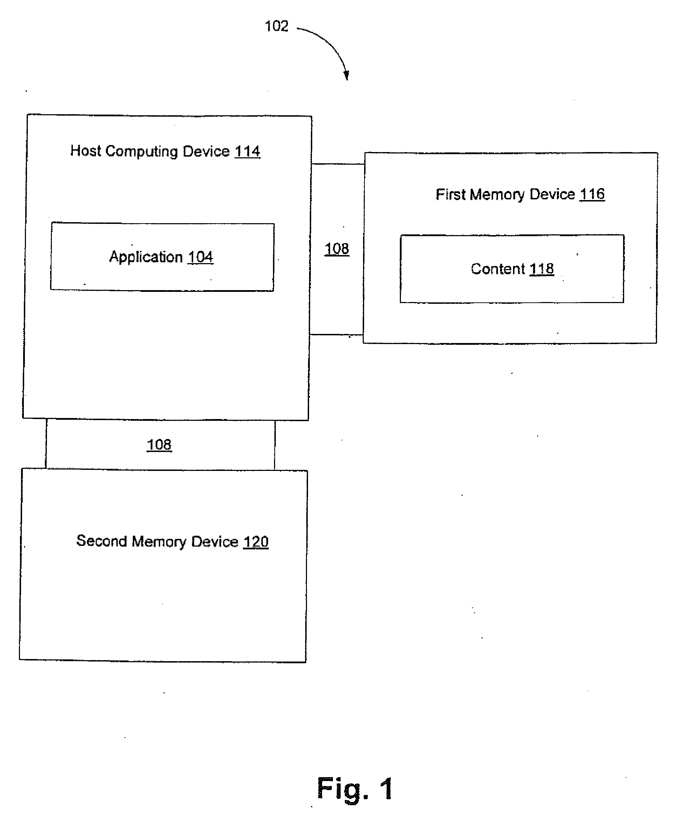

Figure 1 is a simplified block diagram of a system of apparatuses for accessing content, in accordance with an embodiment of the invention. As shown in Figure 1, system 102 includes host computing device 114, first memory device 116, and second memory device 120. In an embodiment, first memory device 116 and/or second memory device 120 may be removably coupled to host computing device 114 by way of mechanical interface 108 such as pin and/or socket connectors. In another embodiment, first memory device 116 and/or second memory device 120 may interface with host computing device 114 through a contactless interface. With contactless interface, for example, host computing device 114 may communicate with first memory device 116 and/or second memory device 120 through Radio Frequency Identification (RFID) induction technology. First memory device 116 and second memory device 120 are memory storage devices. As will be explained below, an example of first memory device 116 is a memory card using non-volatile memory. In another example, second memory device 120 is a smart card, such as a Subscriber Identity Module (SIM) card.

Host computing device 114 can include a variety of electronic devices capable of accessing first memory device 116 and second memory device 120. Access may include storing content 118 on first memory device 116. Access may also include reading or retrieving content 118 from first memory device 116. Host computing device 114 hosts application 104. Application 104 may include a variety of program applications. For example, application 104 may be an operating system that manages the hardware and software resources on host computing device 114. In another example, application 104 may be a multimedia player configured to play audio and video files. Additionally, for example, application 104 may be a video game. Application 104 may access content 118 stored in first memory device 116. Content 118 can include a variety af data. Examples of content 118 include audio files encoded in audio file formats such as WAVE, MPEG-1 Audio Layer 3 (MP3), Advanced Audio Coding (AAC), and other audio file formats. Content 118 may also include video files encoded in video file formats such as Audio Video Interleave (AVI), Moving Picture Experts Group (MPEG), and other video file formats. Other examples of content 118 include document files, image files, application files, and other data.

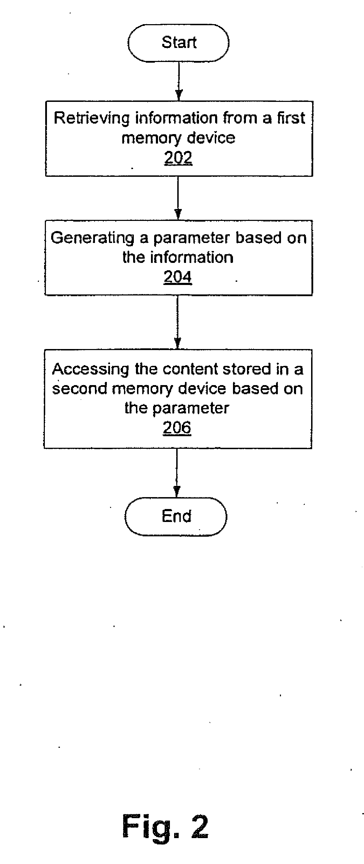

Figure 2 is a flowchart diagram of a general overview for accessing content stored in a memory device, in accordance with an embodiment of the invention. As shown in Figure 2, information from a first memory device is retrieved at 202. The information is stored in the first memory device and may include a variety of data. For example, information may be associated with a mobile phone, such as an identifier. The identifier may be configured to identify, for example, a network associated with the mobile phone (i.e., a network identifier), a user, a phone number, or a country (i.e., country identifier). The network identifier and the country identifier may be included in an International Mobile Subscriber Identity (IMSI). The IMSI is a unique number that is associated with a networked mobile phone and can be stored in a SIM card. An IMSI can be fifteen digits long where a portion of the digits (e.g., first three digits) can be the country identifier (e.g., Mobile Country Code (MCC)) and the other portion of the digits (e.g., the next twelve digits) can be the network identifier (e.g., Mobile Network Code (MNC)). The phone number of the mobile phone can be included in a Mobile Station Integrated Services Digital Network (MSISDN), which can also be located in a SIM card. The MSISDN may be a fifteen digit number that identifies the phone number of the mobile phone. In addition to identifiers, the information retrieved from the first memory device can include a serial number of a host computing device, a serial number of the first memory device, and other information.

After the information from the first memory device is retrieved, a parameter is generated based on the information at 204. In other words, the parameter may be expressed as

$$Parameter = F\ (Information) \qquad (1.0)$$

where the parameter is a function of the information. The function may include a variety of functions, such as a cryptographic function. For example, in an embodiment, the information may be encrypted based on a cryptographic function to define the parameter. An example of a cryptographic function is a hash function, whereby the parameter can be a hash value of the hash function. Other cryptographic functions may be based on the Advanced Encryption Standard (AES), Data Encryption Standard (DES), or other encryption techniques. The resulting parameter as defined in Equation 1.0 includes a variety of data that may be associated with the access of or gaining access to the content. For example, the parameter may be a cryptographic key used for the decryption (and encryption) of the content. Instead of the cryptographic key, the parameter may also include a reference to the cryptographic key. The reference, for instance, may be a number or string that identifies the cryptographic key. The parameter may also include an authentication key. The authentication key is a cryptographic key used for authentication sessions between, for example, the host computing device and the first memory device or between the first memory device and a second memory device. In another example, the parameter may be a cryptographic nonce. A cryptographic nonce is a number that can be used to generate a cryptographic key or an authentication key. Furthermore, the parameter may also include a credential that can be used to access, for example, an account on the second memory device. The credential can include, for example, an account name associated with an account, a password associated with the account, or other credentials.

At 206, content stored in a second memory device is accessed based on the parameter. Depending on the type of security system used, the content can be accessed by a number of different techniques. For example, in an embodiment, the parameter is a cryptographic key or a reference to a cryptographic key and the parameter is used to decrypt the content stored in the second memory device. In another embodiment, the parameter may be a credential or authentication key used to gain access to an account on the second memory device such that the content stored in the second memory device may be accessed. As will be explained in more detail below, access to an account may include authentication techniques such as login mechanisms, challenge/signed response, and other authentication techniques. With the access of content dependent on the generated parameter, the content is bound to the first memory device or information stored in the first memory device. As a result, content stored in the second memory device cannot be accessed without the first memory device.

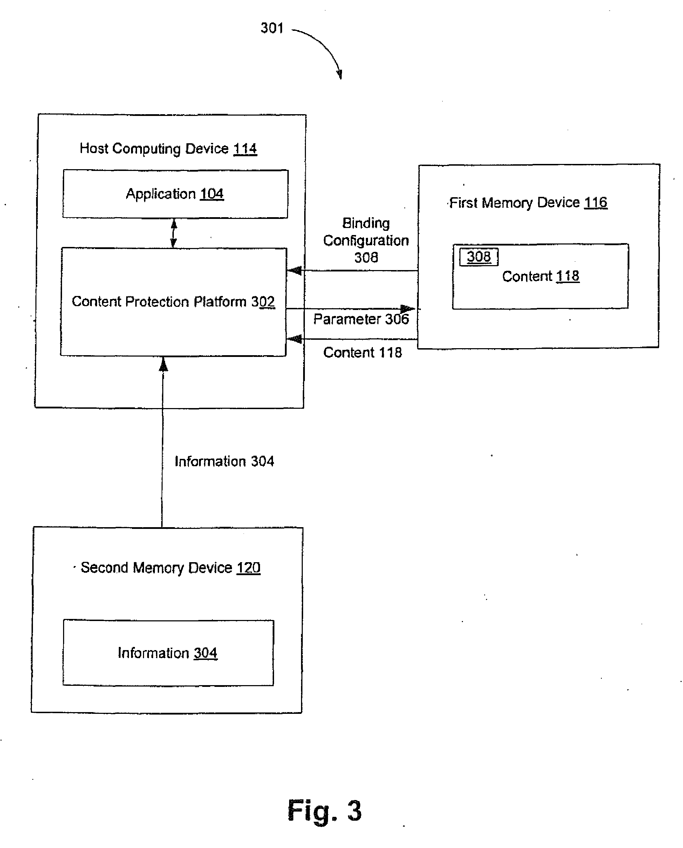

Figure 3 is a simplified block diagram of a system for accessing content, in accordance with an embodiment of the invention. System 301 includes host computing device 114 removably coupled to first memory device 116 and second memory device 120. Application 104 and content protection platform 302 are hosted on host computing device 114. Content 118 and information 304 are stored in first memory device 116 and second memory device 120, respectively. In an embodiment, host computing device 114 may be configured to generate parameter 306 based on information 304 and access content 118 stored in first memory device 116. For example, content protection platform 302 hosted on host computing device 114 may include the program instructions to generate parameter 306 and to access content 118. Application 104 may access content 118 by way of content protection platform 302. In general, content protection platform 302 is a technology platform for securing content 118 to first memory device 116. With content protection platform 302, a user may transfer first memory device 116 and its content 118 without compromising the content protection. There are a variety of content protection platforms that may be used for securing content, examples being sold under the trademarks TrustedFlash™ and Gruvi™ (as manufactured by SanDisk, Inc.).

In an embodiment, content protection platform 302 may initially retrieve binding configuration 308 associated with content 118. In general, binding configuration 308 includes information regarding the security to be used to bind content 118 with second memory device 120 or information from the second memory device. Binding configuration 308 can include information associated with the generation of parameter 306 (e.g., encryption of information 304) and the access of content 118 (e.g., accessing an account associated with the content). For example, binding configuration 308 may specify the type of credential, the security method (e.g., access by authentication, decryption of content 118, and other security methods), the access protocol, the account location for use in login, the type of information (e.g., IMSI, network ID, phone number, and other information) the content is associated with (or bound to), and other binding configurations. In addition, as will be explained in more detail below, binding configuration 308 may include a location of a license that is associated with content 118. Note that binding configuration 308 is associated with content 118. To be associated with content 118, binding configuration 308 may be located or included in content 118. For example, binding configuration 308 may be located in the header or footer of content 118, which may not be encrypted. Alternatively, binding configuration 308 may be located separately from content 118. If located separately, binding configuration 308 may be associated with content 118 with the inclusion of a pointer to the content. Content 118 may also include a pointer to binding configuration 308 if the binding configuration is located separately from the content. It should be appreciated that content protection platform 302 may already be configured to use a pre-defined binding configuration. In other words, binding configuration 308 may be preprogrammed in content protection platform 302. As a result, in another embodiment, content 118 does not include binding configuration 308 and therefore, the binding configuration is not retrieved.

Still referring to Figure 3, content protection platform 302 then retrieves information 304 from second memory device 120 and, as shown in Equation 1.0, generates parameter 306 based on the information. In an embodiment, parameter 306 may be generated by encrypting information 304. Binding configuration 308 may define the type of encryption (AES, DES, and other encryption techniques). Content protection platform 302 can then access content 118 stored in first memory device 116 based on parameter 306. In an embodiment, access may include the use of parameter 306 to decrypt content 118. In another embodiment, as will be explained in more detail below, access may include the use of parameter 306 to access an account on first memory device 116.

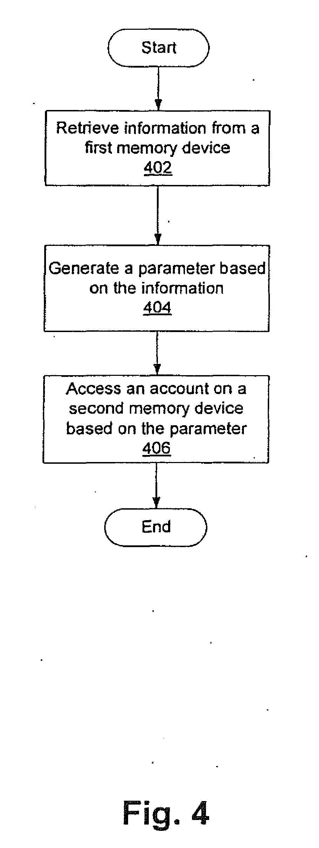

Figure 4 is a flowchart diagram depicting the access of an account to gain access to content, in accordance with an embodiment of the invention. At 402, a content protection platform hosted on a host computing device, such as a mobile phone, retrieves information stored in a first memory device. Here, the memory device is removably coupled to the host computing device and the first memory device may, for example, be a SIM card. With the information, the content protection platform generates one or more parameters based on the information at 404, which is expressed in Equation 1.0. In an embodiment, the parameter may be generated by encrypting the information. In other words, the information is encrypted using a cryptographic function to define a parameter. By using encryption to generate the parameter, the source of the information used to generate the credential is masked or hidden.

At 406, the parameter may be used for accessing an account on a second memory device, in accordance with an embodiment. It should be appreciated that this second memory device may also include a content protection platform to protect content stored in the memory device. Some content protection platforms, such as TrustedFlash™, use accounts to protect content stored in the second memory device. An account defines the grouping of one or more contents stored in the memory device. An account, for example, may include a partition on the memory device, a file directory on the memory device, an area of storage on a content protection platform, or other content groupings. The account may be associated with one or more contents. By gaining access to the account, the content that is associated with the account may be accessed or decrypted.

An account can provide an authentication mechanism to access content associated with the account. It should be appreciated that authentication is the process of verifying the identity of an authorized memory device, host computing device, user, network, or other identities. In an embodiment, an authentication technique includes a login mechanism. Here, the account may be accessed by login to the account. In other words, access can be gained by login to the account. For example, credentials, such as account name and password, may be transmitted to the second memory device. With the correct account name and password, the account can be accessed and, as a result, the content associated with the account also may be accessed. In another embodiment, an authentication technique may include a challenge and response mechanism where the host computing device sends a challenge to the second memory device. In response, the second memory device may encrypt the challenge based on an authentication key or a reference to an authentication key to generate a signed response. The reference to the authentication key, for instance, may be a number or string that identifies the authentication key. The second memory device can include a secure store that stores cryptographic keys, such as authentication keys. With the reference, the second memory device can retrieve the authentication key from the secure store. The second memory device transmits the signed, response to the host computing device and the host computing device then verifies the signed response. Upon verification, an application may access an account on the second memory device to gain access to content that is associated with the account. If access to the account is granted, the content associated with the account may be retrieved or decrypted from the second memory device. Otherwise, if access to the account is not authorized, the content cannot be accessed.

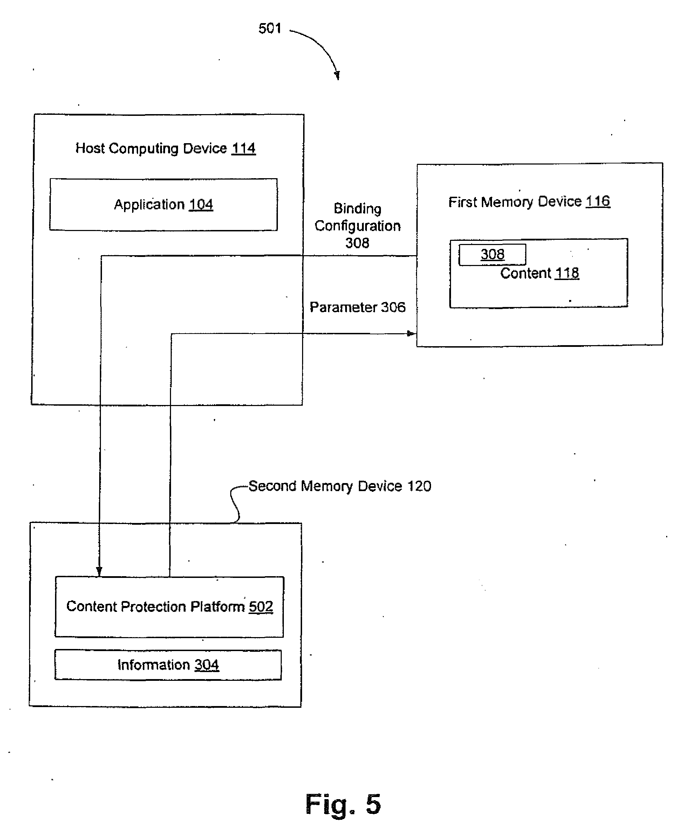

Figure 5 is a simplified block diagram of a system for accessing content, in accordance with another embodiment of the invention. System 501 includes host computing device 114 removably coupled to first memory device 116 and second memory device 120, Application 104 is hosted on host computing device 114 and content 118 and information 304 are stored in first memory device 116 and second memory device 120, respectively. In addition to host computing device 114, second memory device 120 may also be configured to generate parameter 306 based on information 304 and to access content 118 stored in first memory device 116. Here, second memory device 120 may include content protection platform 502, which may be in the form of an applet, and the content protection platform includes the program instructions to generate parameter 306 and to access content 118.

Content protection platform 502 may retrieve binding configuration 308 from content 118 and information 304 from second memory device 120. Parameter 306 may be generated based on information 304. Content protection platform 502 can then access content 118 stored in first memory device 116 based on parameter 306. The various embodiments to access content 118 are described above. Since content protection platform 502 is included in second memory device 120, host computing device 114 mainly facilitates communication between first memory device 116 and second memory device 120. For example, content protection platform 502 retrieves binding configuration 308 from first memory device 116 by way of host computing device 114. In another example, content protection platform 502 transmits parameter 306 to first memory device 116 by way of host computing device 114.

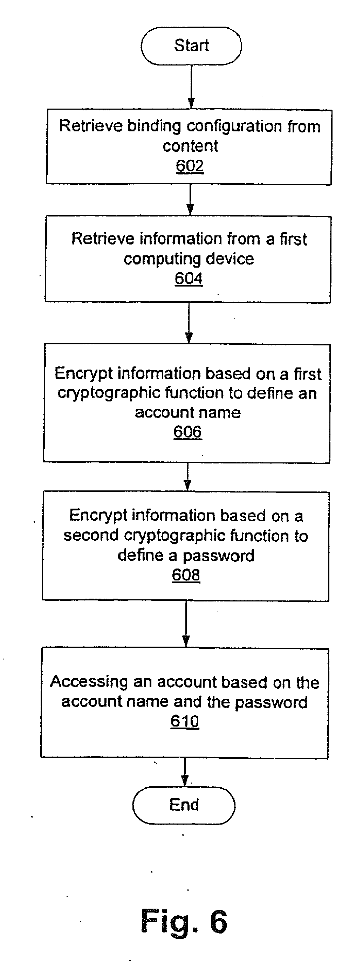

Figure 6 is a flowchart diagram depicting the access of an account to gain access to content, in accordance with another embodiment of the invention. Starting at 602, a content protection platform included in a first memory device retrieves binding configuration from content stored in a second memory device. Both the first and second memory devices are removably coupled to a host computing device. At 604, the content protection platform also retrieves information stored in the first memory device.

With the binding configuration and the information, the content protection platform encrypts the information based on a first cryptographic function at 606 to define an account name. The account name may be expressed as

$$\text{Account Name} = F_1 \text{ (Information)} \quad (2.0)$$

where the account name is a function of the information. The binding configuration may define the type of cryptographic function $F_1$ used to encrypt the information. For example, the information may be encrypted based on AES.

At 608, the content protection platform encrypts the information again based on a second cryptographic function, which is different from the first cryptographic function, to define a password. The password may be expressed as

$$\text{Password} = F_2 \text{ (Information)} \quad (3.0)$$

wherein the password is a function of the information. Here, the binding configuration may also define the type of cryptographic function $F_2$ used to encrypt the information. For example, the information may be encrypted based on a hash function.

At 610, the account may be accessed based on the account name and the password. For example, the content protection platform may login to an account on the second memory device using the account name and password, as defined in Equations 2.0 and 3.0, respectively. Since the content is associated with the account, access to the account also gains access to the content.

**Generation of a Binding Configuration**

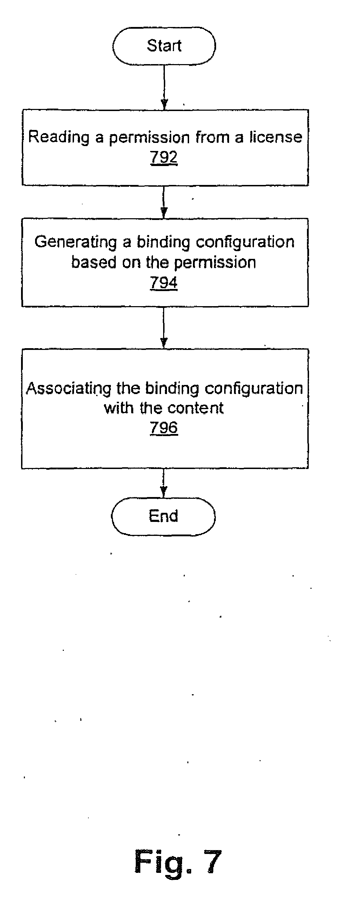

Figure 7 is a flowchart diagram of a general overview for generating a binding configuration, in accordance with an embodiment of the invention. When a host computing device receives content and associated license, the host computing device may retrieve the permission from the license at 792. In general, a license is data (e.g., a string, a file, and other data) that enables content to be accessed. License may include the permissions or rules to access content, such as duration of access, limiting the access of the content to a particular computing device, dates, times, a number of times the content may be accessed, and other permissions. The license therefore may be configured to define the permissions to access content. A user therefore is allowed access to content based on the permissions included in the license. For example, the license may allow content in the form of a music file to be played three times on a specific computing device. In another example, license may allow the content to be accessed but not copied to another computing device.

As shown in 794, the binding configuration may be generated based on the permission. As discussed above, the binding configuration can include the type of information from a memory device (or host computing device) that is associated with the content. In other words, the binding configuration can specify the binding of content with particular information from a memory device or host computing device. For example, the binding configuration may specify that the content is bound to an IMSI stored on a SIM card, a phone number stored on a host computing device, a network identifier from the IMSI stored on a SIM card, information associated with a user, and/or other information.

In an embodiment, the type of binding can be based on the permission retrieved from the license. For example, if the permission specifies that the content may be accessed for a limited amount of time, then the host computing device may generate a binding configuration that specifies the content to be associated with (or bound to) information stored on a host computing device. If the permission specifies that the content may be accessed for an unlimited amount of time, the host computing device may generate a binding configuration that specifies the content to be associated with (or bound to) information stored on a SIM card, such as the IMSI. In another embodiment, the type of binding can be based on the type of content (i.e., content type). Content has a content type. Types of content can include, for example, music files, video files, audio files, image files, and other types. For example, if the content is an image file, the host computing device may generate a binding configuration that specifies the content to be associated with information stored on a host computing device. If the content is a video file, the host computing device may instead generate a binding configuration that specifies the content to be associated with a network identifier stored on a smart card.

After the binding configuration is generated, the host computing device associates the binding configuration with the content at 796. In an embodiment, the binding configuration can be associated by storing the binding configuration in the content. The binding configuration may, for example, be stored in a header or footer of the content. Alternatively, the configuration can be associated by storing a pointer to the binding configuration in the content. Thereafter, the host computing device transmits the license and the content (with or without binding configuration) to a memory device for storage.

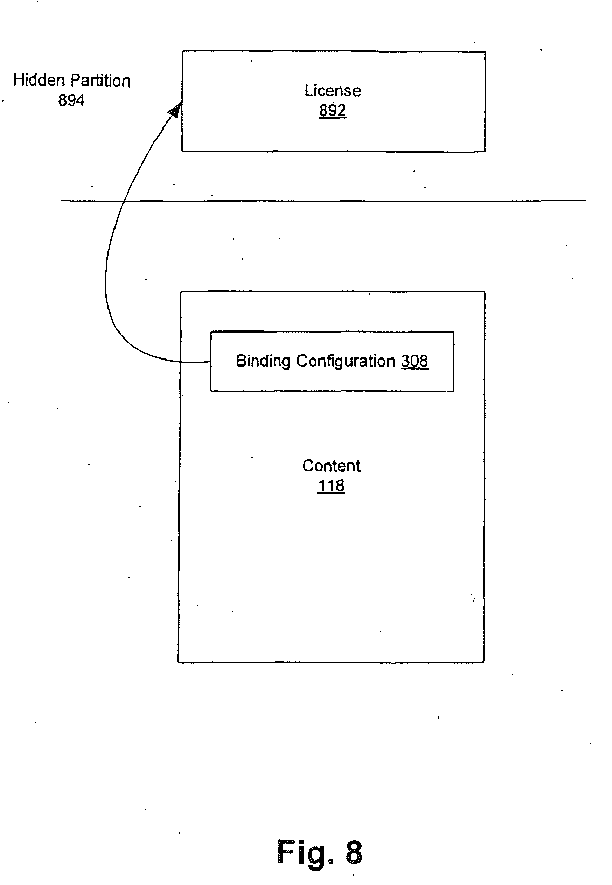

Figure 8 is a simplified block diagram of a license and content with binding configuration, in accordance with an embodiment of the invention. Figure 8 shows content 118 and license 892. Here, the binding configuration is stored in content 118. In an embodiment, binding configuration 308 can additionally include the location of license 892. For example, binding configuration can include a pointer to a location of license 892. License 892 may be stored in hidden partition 894 of a memory device where the license is not visible or accessible by many applications. The pointer in binding configuration 308 can point to the location of license 892 in hidden partition 894. As a result, multiple contents, such as content 118, can be configured to use one or more licenses, such as license 892. For example, multiple contents can include binding configurations, such as binding configuration 308, that point to one license. It should be appreciated that license 892 can also be configured to bind content 118 to a particular information stored on a memory device or computing device. For instance, license 892 can specify that content 118 is bound to information from a SIM card. With multiple licenses having different bindings, content 118 may be configured to bind to different information by including one or more pointers in binding configuration 308 that point to one or more licenses.

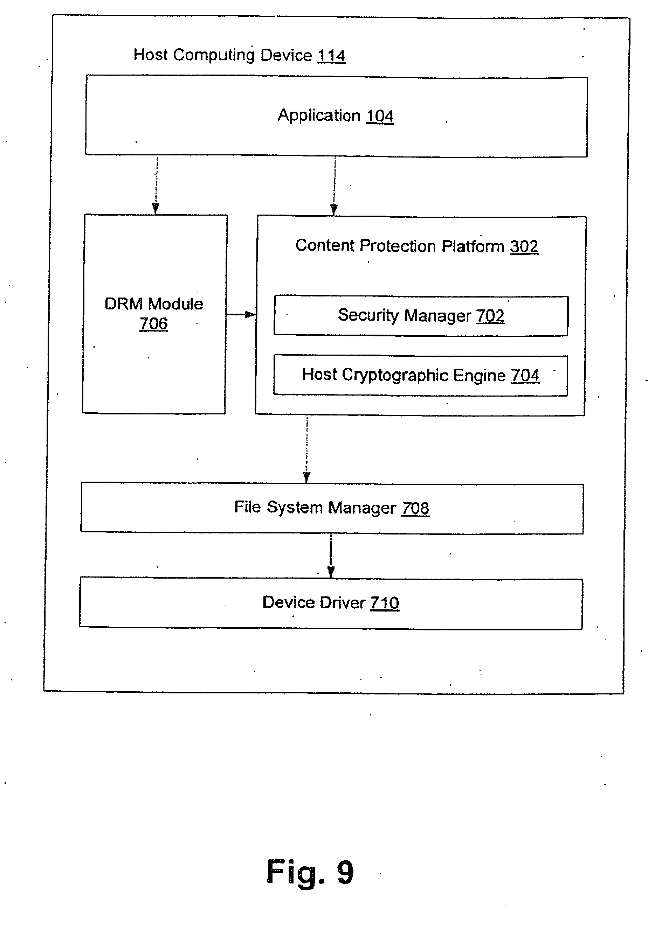

Figure 9 is a simplified block diagram of program applications that may be hosted on a host computing device for accessing content and generating a binding configuration, in accordance with an embodiment of the invention. Host computing device 114 may host application 104, digital rights management (DRM) module 706, content protection platform 302, file system manager 708, and device driver 710. As discussed above, application 104 may include a variety of prgram applications, such as multimedia players, video games, and other applications. In communication with application 104 are DRM module 706 and content protection platform 302. DRM module 706 allows host computing device 114 to manage the digital rights of contents stored in a memory device or other locations. For example, DRM module 706 may protect content and control its distribution. As discussed above, content protection platform 302 is a technology platform for securing content on a memory device. Content protection platform 302 can include security manager 702 and host cryptographic engine 704. In general, security manager 702 manages the access of content stored in a memory device. Management operations include, for example, checking whether the content is protected, generating a parameter based on information retrieved from a memory device, accessing the content stored in a memory device based on the parameter, and other operations. Host cryptographic engine 704 includes the cryptographic libraries to handle cryptographic operations. Content protection platform 302 and DRM module 706 together provide host computing device 114 (and memory device that is removably coupled to the host computing device) with secure storage and content management capabilities. For example, content protection platform 302 and DRM module 706 allow secure storage of content (e.g., music files, movie files, software, and other data) stored in the memory device and enforcement of pre-defined policies for controlling access to the content.

In communication with content protection platform 302 is file system manager 708. In general, file system manager 708 is configured to manage and handle access (e.g., reading, writing, and other access operations) of content stored in a memory device. For example, file system manager 708 can read content from a memory device and transmit the content to content protection platform 302 for processing. Host computing device 114 can interface with a memory device. Host computing device 114 therefore can include device driver 710, which is in communication with file system manager 708, to interface with the memory device. Device driver 710 may, for example, include the lower-level interface functions to communicate with a memory device. An example of a lower-level interface function include input/out functions associated with input and output of data to and from the memory device.

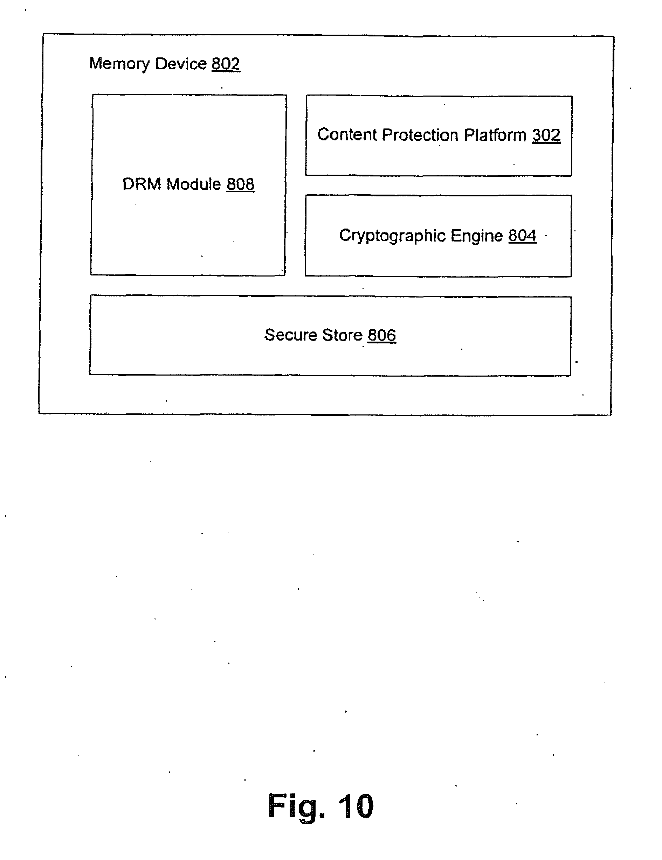

Figure 10 is a simplified block diagram of program applications that may be included in a memory device, in accordance with an embodiment of the invention. Memory device 802 may include DRM module 808, content protection platform 302, cryptographic engine 804, and secure store 806. In memory device 802, DRM module 808 allows memory device 802 to manage the digital rights of content stored in the memory device. For example, DRM module 808 may be configured to enforce content rights, Content protection platform 302, as discussed above, is a technology platform for securing content stored in memory device 802. Content protection platform 302 may be configured to generate a parameter based on information retrieved from another memory device, accessing content stored in memory device 802 based on the parameter, and may be configured for other operations. Cryptographic engine 804 handles cryptographic operations and secure store 806 stores the cryptographic keys.

It should be appreciated that in other embodiments, host computing device 114 of Figure 9 and memory device 802 of Figure 10 may include fewer or more program applications apart from those shown in Figures 9 and 10. For example, as shown in Figure 9, file system manager 708 and device driver 710 may be integrated into content protection platform 302. Host computing device 114 of Figure 9 may therefore include DRM module 706 and content protection platform 302.

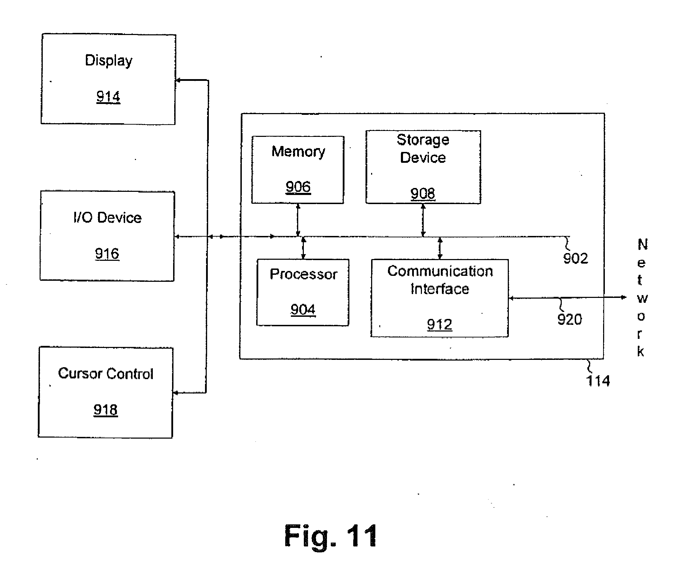

Figure 11 is a simplified block diagram of a general overview of a host computing device suitable for hosting a content protection platform and other program applications, in accordance with an embodiment of the invention. In some embodiments, host computing device 114 may be used to implement computer programs (e.g., content protection platform), logic, applications, methods, processes, or other software to access content. Examples of host computing device 114 include a desktop computer, a server, a portable computing device, a personal digital assistant, a mobile phone, a computational engine within an appliance, and other computer systems. As shown in Figure 11, host computing device 114 includes bus 902 or other communication mechanism for communicating information, which interconnects subsystems and devices, such as processor 904, system memory 906 (e.g., random access memory (RAM)), storage device 908 (e.g., read only memory (ROM), magnetic disk drives, optical disk drives, and other storage devices), communication interface 912 (e.g., modem or Ethernet card), display 914 (e.g., cathode ray tube (CRT) or liquid crystal display (LCD)), input/output device 916 (e.g., keyboard), and cursor control 918 (e.g., mouse or trackball).

In some embodiments, host computing device 114 performs specific operations by processor 904 when executing one or more sequences of one or more program instructions stored in system memory 906. Such program instructions may be read into system memory 906 from another computer readable medium, such as storage device 908. In some embodiments, hard-wired circuitry may be used in place of or in combination with software program instructions to implement embodiments of the invention.

It should be appreciated that the term "computer readable medium" refers to suitable medium that participates in providing program instructions to processor 904 for execution. Such a medium may take many forms, including but not limited to, non-volatile media, volatile media, and transmission media. Non-volatile media may include, for example, optical or magnetic disks, such as storage device 908. Volatile media may include dynamic memory, such as system memory 906, Transmission media includes coaxial cables, copper wire, and fiber optics, including wires that comprise bus 902. Transmission media can also take the form of acoustic or light waves, such as those generated during radio wave and infrared data communications. Common forms of computer readable media include, for example, magnetic mediums (e.g., floppy disk, flexible disk, hard disk, magnetic tape, and other magnetic mediums), optical mediums (e.g., compact disc read-only memory (CD-ROM) and other optical mediums), physical medium with patterns (e.g., punch cards, paper tape, any other physical mediums), memory chips or cartridges, carrier waves, (e.g., RAM, programmable read-only memory (PROM), erasable programmable read-only memory (EPROM), flash memory, and other memory chips or cartridges), and any other medium from which a computer can read.

In some embodiments, execution of the sequences of program instructions to practice the embodiments may be performed by a single computing device 114. In other embodiments, two or more computer systems, such as host computing device 114, coupled by communication link 920 (e.g., local area network (LAN), public switched telephone network (PSTN), wireless network, and other communication links) may perform the sequence of program instructions to practice the embodiments in coordination witch one another. In addition, computing device 114 may transmit and receive messages, data, and instructions, including program, i.e., application code, through communication link 920 and communication interface 912. Received program instructions may be executed by processor 904 as the program instructions are received, and/or stored in storage device 908, or other non-volatile storage for later execution.

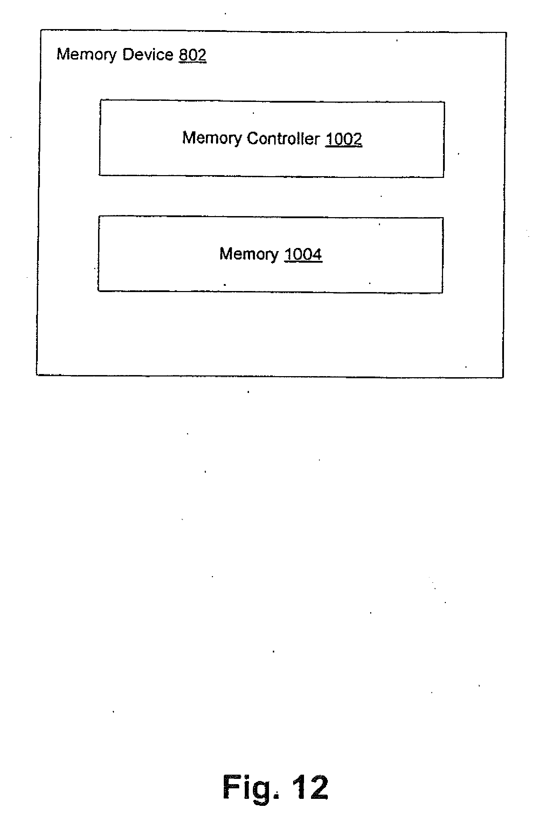

Figure 12 is a simplified block diagram of a memory device, in accordance with an embodiment of the invention. As shown in Figure 12, memory device 802 includes memory controller 1002 in communication with memory 1004. In general, memory controller 1002 controls the operation of memory 1004. Examples of operations include writing (or programming) data, reading data, erasing data, verifying data, and other operations. Additionally, memory controller 1002 may be configured to generate a parameter based on information retrieved from another memory device, access content stored in memory 1004 based on the parameter, and may be configured for other operations described above.

Memory device 802 can include a variety of non-volatile memory structures and technologies. Examples of memory technologies include flash memories (e.g., NAND, NOR, Single-Level Cell (SLC/BIN), Multi-Level Cell (MLC), Divided bit-line NOR (DINOR), AND, high capacitive coupling ratio (HiCR), asymmetrical contactless transistor (ACT), and other flash memories), erasable programmable read-only memory (EPROM), electrically-erasable programmable read-only memory (EEPROM), read-only memory (ROM), one-time programmable memory (OTP), and other memory technologies. In an embodiment, memory device 802 may be a smart card using EEPROM, ROM, or other memory technologies. Examples of smart cards include a contactless smart card, a Subscriber Identity Module (SIM) card, and other smart cards. In another embodiment, memory device 802 can be a flash memory card using flash memory. Examples of flash memory cards include a variety of the following trademarked products such as Secure Digital™ (compliant with specifications maintained by the SD Card Association of San Ramon, California), MultiMediaCard™ (compliant with specifications maintained by the MultiMediaCard Association ("MMCA") of Palo Alto, California), MiniSD™ (as manufactured by SanDisk, Inc.), MicroSD™ (as manufactured by SanDisk, Inc.), CompactFlash™ (compliant with specifications maintained by the CompactFlash Association ("CFA") of Palo Alto, California), SmartMedia™ (compliant with specifications maintained by the Solid State Floppy Disk Card ("SSFDC") Forum of Yokohama, Japan), xD-Picture Card™ (compliant with specifications maintained by the xD-Picture Card Licensing Office of Tokyo, Japan), Memory Stick™ (compliant with specifications maintained by the Solid State Floppy Disk Card ("SSFDC") Forum of Yokohama, Japan), TransFlash™ (as manufactured by SanDisk, Inc.), and other flash memory cards. In an embodiment, memory device 802 can be implemented as a non-removable memory device.

The following patent documents contain embodiments that can be used with the embodiments described herein. Each of these patent documents is being filed on the same date as the present application, is assigned to the assignee of the present invention, and is hereby incorporated by reference: "Methods for Linking Content with License," U.S. patent application serial no. 11/599,655; "Apparatuses for Linking Content with License," U.S. patent application serial no. 11/600,270; "Methods for Accessing Content Based on a Session Ticket," U.S. patent application serial no. 11/600,263; "Apparatuses for Accessing Content Based on a Session Ticket," U.S. patent application serial no. 11/600,273; "Apparatuses for Binding Content to a Separate Memory Device," U.S. patent application serial no. 11/600,245; "Method for Allowing Multiple Users to Access Preview Content," U.S. patent application serial no. 11/599,994; "System for Allowing Multiple Users to Access Preview Content," U.S. patent application serial no. 11/599,995; "Method for Allowing Content Protected by a First DRM System to Be Accessed by a Second DRM System," U.S. patent application serial no. 11/600,005; "System for Allowing Content Protected by a First DRM System to Be Accessed by a Second DRM System," U.S. patent application serial no. 11/599,991; "Method for Connecting to a Network Location Associated with Content," U.S. patent application serial no. 11/600,300; and "System for Connecting to a Network Location Associated with Content," U.S. patent application serial no. 11/600,006.

Although the foregoing embodiments have been described in some detail for purposes of clarity of understanding, the embodiments are not limited to the details provided. There are many alternative ways of implementing the embodiments. Accordingly, the disclosed embodiments are to be considered as illustrative and not restrictive, and the embodiments are not to be limited to the details given herein, but may be modified within the scope and equivalents of the appended claims. In the claims, elements and/or operations do not imply any particular order of operation, unless explicitly stated in the claims.

Further embodiments of the invention are set out in the following clauses:

1. A method for accessing content, comprising:

retrieving information from a first memory device;
generating a parameter based on the information; and
accessing an account on a second memory device based on the parameter, the second memory device being configured to store the content, the account being associated with the content,
wherein the first and second memory devices are configured to be removably coupled to a computing device.

2. The method of clause 1, wherein the accessing the account is configured to gain access to the content.

3. The method of clause 1, further comprising retrieving a binding configuration associated with the content, the binding configuration being associated with the generating the parameter and the accessing the account.

4. The method of clause 1, wherein the first memory device is a subscriber identity module (SIM) card.

5. The method of clause 1, wherein the information is associated with a mobile phone.

6. The method of clause 1, wherein the information is configured to identify a network associated with a mobile phone.

7. The method of clause 1, wherein the computing device is a mobile phone.

8. The method of clause 1, wherein the parameter is a nonce, the nonce being configured for use in generating an authentication key.

9. The method of clause 1, wherein the parameter is an authentication key.

10. The method of clause 1, wherein the information is associated with a portion of an International Mobile Subscriber Identity.

11. A computer program product embodied in a computer readable medium and comprising computer instructions for:

retrieving an international mobile station identity (IMSI) from a subscriber identity module (SIM) card;
encrypting the IMSI to define a parameter; and
transmitting the parameter to a memory device to gain access to an account on the memory device, the account being associated with the content.

12. The computer program product of clause 11, wherein the memory device and the SIM card are configured to be removably coupled to a mobile phone.

13. The computer program product of clause 11, wherein the access is gained by login to the account.

14. The computer program product of clause 11, wherein the parameter is a password associated with the account.

15. The computer program product of clause 11, wherein the parameter is an account name associated with the account.

16. A computer program product embodied in a computer readable medium and comprising computer instructions for:

retrieving information from a smart card;
encrypting the information based on a first cryptographic function to define an account name;
encrypting the information based on a second cryptographic function to define a password;
accessing an account on a memory device based on the account name and the password, the memory device being configured to store content, the account being associated with the content,
wherein the smart card and the memory device are configured to be removably coupled to a computing device.

17. The computer program product of clause 16, wherein the account name is associated with the account.

18. The computer program product of clause 16, wherein the password is associated with the account.

19. The computer program product of clause 16, wherein the information is an International Mobile Subscriber Identity.

20. The computer program product of clause 18, wherein the information is a phone number associated with a mobile phone.

21. A method for generating a binding configuration, comprising:

retrieving a permission from a license, the license being associated with a content;
generating the binding configuration based on the permission, the binding configuration comprising an association of information from a first memory device with the content; and
associating the binding configuration with the content.

22. The method of clause 21, wherein the associating the binding configuration with the content comprises storing the binding configuration in the content.

23. The method of clause 21, wherein the binding configuration is stored in a header of the content.

24. The method of clause 21, wherein binding configuration further comprises a location of the license.

25. The method of clause 21, wherein the content is stored in a second memory device.

26. The method of clause 21, wherein the first memory device is a smart card.

27. A computing device, comprising:

a memory; and a processor in communication with the memory, the processor being configured to:
retrieve information from a first memory device, the first memory device being configured to be removably coupled to the computing device, generate a parameter based on the information, and
access an account on a second memory device based on the parameter to gain access to content stored in the second memory device, the second memory device being configured to be removably coupled to the computing device.

28. The computing device of clause 27, wherein the processor is further configured to retrieve a binding configuration from the content, the binding configuration being associated with the generation of the parameter and the access of the account.

29. The computing device of clause 27, wherein the first memory device is a smart card.

30. The computing device of clause 27, wherein the computing device is a mobile phone.

31. The computing device of clause 27, wherein the information is an identifier associated with a mobile phone.

32. The computing device of clause 27, wherein the parameter is a nonce, the nonce being configured for use in generating an authentication key.

33. The computing device of clause 27, wherein the parameter is an authentication key.

34. The computing device of clause 27, wherein the information is a network identifier.

35. A memory device, comprising:

a memory configured to store information; and
a memory controller in communication with the memory, the memory controller being configured to:

encrypt the information to define a parameter,
access an account on a second memory device based on the parameter to gain access to content stored in the second memory device,
wherein the memory device and the second memory device are configured to be removably coupled to a computing device.

36. The memory device of clause 35, wherein the memory controller is further configured to retrieve a binding configuration from the content, the binding configuration being associated with the encryption of the information and the access of the account.

37. The memory device of clause 35, wherein the parameter is an authentication key.

38. The memory device of clause 35, wherein the parameter is a nonce, the nonce being configured for use in generating an authentication key.

39. The memory device of clause 35, wherein the memory device is a subscriber identity module (SIM) card.

40. The memory device of clause 35, wherein the information is an International Mobile Subscriber Identity.

41. A system, comprising:

a subscriber identity module (SIM) card, the SIM card being configured to store an international mobile station identity (IMSI); and
a mobile phone removably coupled to the SIM card, the mobile phone comprising a memory and a processor, the processor being configured to:

retrieve the IMSI from the SIM card,
encrypt the IMSI based on a first cryptographic function to define a first credential,
encrypt the IMSI based on a second cryptographic function to define a second credential, and
transmit the first and second credentials to a memory device to gain access to an account on the memory device, the account being associated with content stored in the memory device.

42. The system of clause 41, wherein the access is gained by login to the account.

43. The system of clause 41, wherein the first credential is an account name associated with the account.

44. The system of clause 41, wherein the second credential is a password associated with the account.

45. A computing device, comprising:

a memory; and
a processor in communication with the memory, the processor being configured to:

receive a content, the content having a content type,
generate a binding configuration based on the content type, the binding configuration comprising an association of information from a first memory device with the content, and
store the binding configuration in the content.

46. The computing device of clause 45, wherein the first memory device is removably coupled to the computing device.

47. The computing device of clause 45, wherein the binding configuration is stored in a header of the content.

48. The computing device of clause 45, wherein binding configuration further comprises a location of the license.

49. The computing device of clause 45, wherein the content is stored in a second memory device, the second memory device being removably coupled to the computing device.

50. The computing device of clause 45, wherein the first memory device is a subscriber identity module (SIM) card.

**Claims**

1. A storage device, comprising:

a memory configured to store information; and
an interface configured to place the storage device in communication with a host device, wherein the host device is in a communication link with a second storage device;
a processor in communication with the memory and the interface, the processor being configured to:

retrieve the information from the memory;
generate a parameter based on the information, and
access an account on the second storage device based on the parameter to gain access to content stored in the second storage device, wherein the storage device communicates with the second storage device via the interface and the host device.

2. The storage device of claim 1, wherein the processor is further configured to retrieve a binding configuration from the content stored in the second storage device, the binding configuration being used by the processor to generate the parameter.

3. The storage device of claim 1, wherein the storage device is a smart card.

4. The storage device of claim 1, wherein the host device is a mobile phone.

5. The storage device of claim 1, wherein the information is an identifier associated with a mobile phone.

6. The storage device of claim 1, wherein the parameter is a nonce, the nonce being configured for use in generating an authentication key.

7. The storage device of claim 1, wherein the parameter is an authentication key.

8. The storage device of claim 1, wherein the information is a network identifier.

9. A method for accessing an account on a storage device, the method comprising:

performing the following in a processor of a storage device having a memory configured to store information and further having an interface configured to place the storage device in communication with a host device, wherein the host device is in a communication link with a second storage device:

retrieving the information from the memory;
generating a parameter based on the information, and
accessing an account on a second storage device based on the parameter to gain access to content stored in the second storage device, wherein the storage device communicates with the second storage device via the interface and the host device.

10. The method of claim 9, wherein the processor is further configured to retrieve a binding configuration from the content stored in the second storage device, the binding configuration being used by the processor to generate the parameter.

11. The method of claim 9, wherein the storage device is a smart card.

12. The method of claim 9, wherein the host device is a mobile phone.

13. The method of claim 9, wherein the information is an identifier associated with a mobile phone.

14. The method of claim 9, wherein the parameter is a nonce, the nonce being configured for use in generating an authentication key.

15. The method of claim 9, wherein the parameter is an authentication key or a network identifier.

102

Host Computing Device 114

Application 104

108

First Memory Device 116

Content 118

108

Second Memory Device 120

Fig. 1

```
        ┌─────────────┐
        │    Start    │
        └─────────────┘
               │
               ▼
┌─────────────────────────────┐
│ Retrieving information from a first │
│       memory device         │
│            202              │
└─────────────────────────────┘
               │
               ▼
┌─────────────────────────────┐
│ Generating a parameter based on │
│       the information       │
│            204              │
└─────────────────────────────┘
               │
               ▼
┌─────────────────────────────┐
│  Accessing the content stored in a │
│ second memory device based on │
│       the parameter         │
│            206              │
└─────────────────────────────┘
               │
               ▼
        ┌─────────────┐
        │     End     │
        └─────────────┘
```

# Fig. 2

301

Host Computing Device 114

Application 104

Binding
Configuration
308

First Memory Device 116

308

Content 118

Content Protection Platform 302

Parameter 306

Content 118

Information 304

Second Memory Device 120

Information 304

Fig. 3

Start

Retrieve information from a
first memory device
402

Generate a parameter based
on the information
404

Access an account on a
second memory device
based on the parameter
406

End

# Fig. 4

501

Host Computing Device 114

Application 104

Binding
Configuration
308

First Memory Device 116

308
Content 118

Parameter 306

Second Memory Device 120

Content Protection Platform 502

Information 304

Fig. 5

```
          ┌─────────┐
          │  Start  │
          └─────────┘
               │
               ▼
 ┌───────────────────────────────┐
 │ Retrieve binding configuration from │
 │          content              │
 │            602                │
 └───────────────────────────────┘
               │
               ▼
 ┌───────────────────────────────┐
 │ Retrieve information from a first │
 │      computing device         │
 │            604                │
 └───────────────────────────────┘
               │
               ▼
 ┌───────────────────────────────┐
 │ Encrypt information based on a first │
 │ cryptographic function to define an │
 │        account name           │
 │            606                │
 └───────────────────────────────┘
               │
               ▼
 ┌───────────────────────────────┐
 │ Encrypt information based on a │
 │ second cryptographic function to │
 │     define a password         │
 │            608                │
 └───────────────────────────────┘
               │
               ▼
 ┌───────────────────────────────┐
 │ Accessing an account based on the │
 │ account name and the password │
 │            610                │
 └───────────────────────────────┘
               │
               ▼
          ┌─────────┐
          │   End   │
          └─────────┘
```

# Fig. 6

```
                    ( Start )
                        |
                        v
    +-----------------------------------+
    | Reading a permission from a license |
    |                792                |
    +-----------------------------------+
                        |
                        v
    +-----------------------------------+
    | Generating a binding configuration |
    |       based on the permission      |
    |                794                |
    +-----------------------------------+
                        |
                        v
    +-----------------------------------+
    | Associating the binding configuration |
    |         with the content          |
    |                796                |
    +-----------------------------------+
                        |
                        v
                    ( End )
```

# Fig. 7

Hidden Partition
894

License
892

Binding Configuration 308

Content
118

# Fig. 8

Host Computing Device 114

Application 104

DRM Module
706

Content Protection Platform 302

Security Manager 702

Host Cryptographic Engine 704

File System Manager 708

Device Driver 710

# Fig. 9

Memory Device 802

DRM Module 808

Content Protection Platform 302

Cryptographic Engine 804

Secure Store 806

# Fig. 10

```
                Display
                  914
```

```
              I/O Device
                 916
```

```
            Cursor Control
                 918
```

```
   ┌──────────────────────────────────────┐
   │   Memory        Storage              │
   │                 Device               │
   │    906           908                 │
   │                                      │
   │                                 902  │
   │  Processor    Communication          │
   │               Interface              │
   │    904                          920  │
   │                 912                  │
   └──────────────────────────────────────┘
                                      114
```

N
e
t
w
o
r
k

## Fig. 11

Memory Device 802

Memory Controller 1002

Memory 1004

# Fig. 12

Europäisches
Patentamt

European
Patent Office

Office européen
des brevets

## EUROPEAN SEARCH REPORT

Application Number

EP 11 18 5500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/069311 A (SANDISK CORP [US]; JOGAND-COULUMB FABRICE [US]; HOLTZMAN MICHAEL [US];) 29 June 2006 (2006-06-29)<br>* paragraph [0004] - paragraph [0013] *<br>* paragraph [0042] - paragraph [0054] *<br>* paragraph [0081] - paragraph [0082] *<br>* paragraph [0156] *<br>* paragraph [0166] - paragraph [0174] *<br>----- | 1-15 | INV.<br>G06F21/20 |
| Y | EP 1 480 103 A (SHARP KK [JP]) 24 November 2004 (2004-11-24)<br>* paragraphs [0004] - [0010] *<br>* paragraphs [0051] - [0069] *<br>----- | 1-15 | |
| A | US 2006/236405 A1 (TERAUCHI TORU [JP] ET AL) 19 October 2006 (2006-10-19)<br>* figures 2,12-14,23,25 *<br>* paragraph [0075] - paragraph [0077] *<br>* paragraph [0125] - paragraph [0130] *<br>----- | 1-15 | |
| A | EP 1 280 149 A (MATSUSHITA ELECTRIC IND CO LTD [JP]) 29 January 2003 (2003-01-29)<br>* figure 14 *<br>* paragraph [0047] - paragraph [0048] *<br>* paragraph [0058] - paragraph [0059] *<br>* paragraph [0105] - paragraph [0121] *<br>* paragraph [0169] - paragraph [0178] *<br>* paragraph [0206] - paragraph [0218] *<br>* paragraph [0223] *<br>* paragraph [0297] - paragraph [0299] *<br>----- | 1-15 | TECHNICAL FIELDS SEARCHED (IPC)<br><br>G06F |
| A | EP 1 445 888 A (MATSUSHITA ELECTRIC IND CO LTD [JP]) 11 August 2004 (2004-08-11)<br>* paragraph [0011] *<br>* paragraph [0058] - paragraph [0070] *<br>* figures 2-4 *<br>-----<br>-/-- | 1-15 | |

The present search report has been drawn up for all claims

| Place of search | Date of completion of the search | Examiner |
|---|---|---|
| The Hague | 1 December 2011 | Sigolo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 410 456 A1**

| Europäisches Patentamt European Patent Office Office européen des brevets | **EUROPEAN SEARCH REPORT** | Application Number EP 11 18 5500 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 635 265 A (NIPPON ELECTRIC CO [JP]) 15 March 2006 (2006-03-15) * paragraph [0021] - paragraph [0032] * * figures 1,2,4 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 1 December 2011 | Sigolo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27

## ANNEX TO THE EUROPEAN SEARCH REPORT
## ON EUROPEAN PATENT APPLICATION NO.

EP 11 18 5500

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2011

| Patent document cited in search report | | Publication date | Patent family member(s) | | Publication date |
|---|---|---|---|---|---|
| WO 2006069311 | A | 29-06-2006 | CN | 101120356 A | 06-02-2008 |
| | | | EP | 1836642 A2 | 26-09-2007 |
| | | | JP | 2008524757 A | 10-07-2008 |
| | | | KR | 20070087175 A | 27-08-2007 |
| | | | WO | 2006069311 A2 | 29-06-2006 |
| EP 1480103 | A | 24-11-2004 | CN | 1574013 A | 02-02-2005 |
| | | | EP | 1480103 A2 | 24-11-2004 |
| | | | JP | 4204901 B2 | 07-01-2009 |
| | | | JP | 2004350059 A | 09-12-2004 |
| | | | KR | 20040101011 A | 02-12-2004 |
| | | | TW | I236680 B | 21-07-2005 |
| | | | US | 2004250093 A1 | 09-12-2004 |
| US 2006236405 | A1 | 19-10-2006 | JP | 2006301887 A | 02-11-2006 |
| | | | US | 2006236405 A1 | 19-10-2006 |
| EP 1280149 | A | 29-01-2003 | AT | 330314 T | 15-07-2006 |
| | | | AT | 383644 T | 15-01-2008 |
| | | | BR | 0202591 A | 29-04-2003 |
| | | | CN | 1396596 A | 12-02-2003 |
| | | | CN | 1822012 A | 23-08-2006 |
| | | | DE | 60212408 T2 | 16-11-2006 |
| | | | DE | 60224480 T2 | 21-05-2008 |
| | | | EP | 1280149 A2 | 29-01-2003 |
| | | | KR | 20030007074 A | 23-01-2003 |
| | | | SG | 106075 A1 | 30-09-2004 |
| | | | US | 2003007640 A1 | 09-01-2003 |
| | | | US | 2007083772 A1 | 12-04-2007 |
| EP 1445888 | A | 11-08-2004 | CN | 1602600 A | 30-03-2005 |
| | | | EP | 1445888 A1 | 11-08-2004 |
| | | | JP | 4060271 B2 | 12-03-2008 |
| | | | KR | 20050035140 A | 15-04-2005 |
| | | | US | 2004260923 A1 | 23-12-2004 |
| | | | WO | 03034651 A1 | 24-04-2003 |
| EP 1635265 | A | 15-03-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 599655 A
- US 600270 A
- US 600263 A
- US 600273 A
- US 600245 A
- US 599994 A
- US 599995 A
- US 600005 A
- US 599991 A
- US 600300 A
- US 600006 A